# EUROPEAN PATENT APPLICATION

(11) **EP 1 494 436 A2**
(43) Date of publication of application: **05.01.2005**
(21) Application number: 04023832.1
(22) Date of filing: 26.02.2001
(51) Int. Cl.: H04M 1/247, H04M 1/725

(54) **Portable telephone with URL accessing function**

(30) Priority: 29.02.2000 JP 2000054915; 29.02.2000 JP 2000054916; 29.02.2000 JP 2000054917; 29.02.2000 JP 2000054921
(62) Divisional of application: 01104738.8
(71) Applicant: MATSUSHITA ELECTRIC INDUSTRIAL CO., LTD., Kadoma-shi, Osaka 571-8501 (JP)
(72) Inventor: Ishigaki, Jungi, Hachioji-shi Tokyo 192-0032 (JP)
(74) Representative: Grünecker, Kinkeldey, Stockmair & Schwanhäusser Anwaltssozietät

(57) **Abstract**

The portable telephone is placed in a waiting state by operating a power key 12. Then, a browser function key (warp key) 8 is pressed, and a little later, a voice key 11 is operated to make transition to an i-warp callable screen. After the beep sound is heard, a screen indicating that the i-warp voice calling is ready appears. Then, the voice calling of URL is practiced. In this case, the "i-warp name" which is the URL name or the name actually spoken by the user in registering the i-warp name with the voice is attached, whereby the URL can be called only by entering the "i-warp name" with the voice.

## Description

### Background of the Invention

The present invention relates to a voice calling method of URL in a portable telephone having a non-voice information communication mode (e.g., i-mode) function, and the portable telephone employing the calling method.

Particularly, the present invention relates to a voice calling method capable of calling the URL with the voice in a simple key operation in the portable telephone.

Further, this invention is particular to a calling method of URL capable of calling the URL displayed on a terminal screen lastly at the previous time in a simple key operation.

Moreover, this invention is particular to a callingmethod of URL capable of calling the URL in a simple key operation.

Further, a home page accessing method wherein there appears a history of plural URLs at which the portable telephone has made a calling access to the Internet by the previous time, thereby allowing the selection of a URL having a history to make a access to a home page of the Internet having the history in a simple manner.

The non-voice information communication mode means an operation mode of the online data service making use of a digital portable telephone, in which a site (program) access service registered at the center, an Internet access service, a message service, and electronic mail (e. g., i-mode mail) are available.

Conventionally, the portable telephone having a non-voice information communication mode (e.g., i-mode) function has a browser (information access software) , therebymaking an access to a home page in the Internet at the URL (Uniform Resource Locator) to acquire the intended information.

Conventionally, there were two methods of making access to the URL in the portable telephone having the non-voice information communication mode (e.g., i-mode) : one including calling a non-voice information communication mode screen, (e.g., an i-mode main screen), selecting the "Internet", determining the selection by a determination key of the navigation key, and then entering the URL; and the other including calling an i-mode main screen, selecting the "Bookmark", determining the selection by a determination key of the navigation key, and then calling the URL registered in the "Bookmark".

However, with the conventional methods of making an access to the URL, it is required to input the URL every time or call the URL registered in the "Bookmark", even if the URL is displayed on the terminal screen lastly at the previous time. Therefore, these methods had the problem of being not user friendly.

### Summary of the Invention

The present invention has been achieved to solve the above-mentioned problem, and it is an object of the invention to provide a voice calling method of URL in a portable telephone capable of calling the URL with the voice in a simple key operation, and the portable telephone with the voice calling method.

Further, it is an object of the invention to provide a calling method of URL in a portable telephone capable of calling the URL displayed on a terminal screen lastly at the previous time in a simple key operation, and the portable telephone employing the calling method.

Moreover, it is an object of the invention to provide a calling method of URL in a portable telephone capable of calling the URL in a simple key operation, and the portable telephone employing the calling method.

Further, it is an object of the invention to provide a home page accessing method in a portable telephone, and the portable telephone with the accessing method, wherein the portable telephone can be accessed to the Internet in a simple manner by selecting a URL from among a plurality of URLs in a history displayed on the screen.

The first aspect of the invention is a voice calling method of URL in a portable telephone capable of gaining access to the URL information through a browser, wherein the portable telephone is placed in a ready state for calling the URL with the voice by pressing a browser function key and then operating a voice input key, while the portable telephone is waiting, and upon calling a URL with the voice, a coincidence judgement is performed whether or not the called URL is matched with the registered URL, wherein if they are matched, the voice calling of URL is made. With this constitution, the voice calling of URL can be effected in a simple operation.

The second aspect of the invention is the voice calling method of URL in the portable telephone, wherein the browser function key is a warp key for warping the portable telephone to a non-voice information communication mode. With this constitution, the voice calling of URL can be effected in a simple operation.

The third aspect of the invention is a portable telephone capable of calling the URL with the voice input employing the voice calling method of URL as described above. With this constitution, the portable telephone capable of calling the URL with the voice can be provided.

The fourth aspect of the invention is a calling method of URL in a portable telephone capable of gaining access to the URL information through a browser, wherein the portable telephone is able to call the URL which has been displayed on a terminal screen lastly at the previous time by pressing a browser function key and then one specific key, while the portable telephone is waiting. With this constitution, the URL displayed on the terminal screen lastly at the previous time can be called in a simple operation.

The fifth aspect of the invention is the calling method of URL in the portable telephone, wherein the browser function key is a warp key for warping the portable telephone to a non-voice information communication mode. With this constitution, the URL displayed on the terminal screen lastly at the previous time can be called in a simple operation.

The sixth aspect of the invention is the calling method of URL in the portable telephone, wherein the specific key is a ten-key "0". With this constitution, the URL displayed on the terminal screen lastly at the previous time can be called in a simple operation.

The seventh aspect of the invention is a portable telephone capable of calling the URL which has been displayed on a terminal screen lastly at the previous time employing the calling method of URL. With this constitution, it is possible to provide the portable telephone capable of calling the URL displayed on the terminal screen lastly at the previous time in a simple operation.

The eighth aspect of the invention is a calling method of URL in a portable telephone capable of gaining access to the URL information through a browser, wherein the portable telephone is able to call the URL which is registered in correspondence to a registration number by pressing a browser function key and then entering the registration number, while the portable telephone is waiting. With this constitution, the URL registered in correspondence to the registration number can be called in a simple operation.

The ninth aspect of the invention is the calling method of URL in the portable telephone, wherein the browser function key is a warp key for warping the portable telephone to a non-voice information communication mode. With this constitution, the URL registered in correspondence to the registration number can be called in a simple operation.

The tenth aspect of the invention is a calling method of URL in a portable telephone capable of gaining access to the URL information through a browser, wherein the portable telephone is able to call the registered URL bypressing a browser function key to display a list of URLs and then selecting a URL through the scrolling operation to determine the position of the URL, while the portable telephone is waiting. With this constitution, the URL registered in correspondence to the registration number can be called even through the scrolling operation.

The eleventh aspect of the invention is a portable telephone capable of calling the URL which has been registered in correspondence to the registration number employing the calling method of URL. With this constitution, it is possible to provide the portable telephone capable of calling the URL registered in correspondence to the registration number in a simple operation.

The twelfth aspect of the invention is a home page accessing method in a portable telephone capable of communicating the non-voice information, wherein when an operation mode of the Internet is initiated to make a access to the Internet, a history of plural URLs for the Internet which have been called by the previous time is displayed on the screen, and by selecting a URL from the history, said portable telephone can make an access to a home page of the Internet at the URL in the history. With this constitution, the portable telephone can be simply accessed to the Internet by selecting the URL from the history.

The thirteenth aspect of the invention is the home page accessing method in the portable telephone, wherein the history of two or more URLs to make a calling access to the Internet can be displayed within an allowable capacity of a history saving memory, without overlapped history for the same URL. With this constitution, two or more items can be left in the history within an allowable capacity of the history saving memory area.

The fourteenth aspect of the invention is the home page accessing method in the portable telephone, wherein when a new URL without history is called, the new URL is entered in a URL entry column to make an access to the new URL, and the new URL is left in the history. With this constitution, since the new URL can be left in the history, the portable telephone can be easily accessed to the Internet from the next time.

The fifteenth aspect of the invention is the home page accessing method in the portable telephone, wherein if the URL history saving memory area is too insufficient to save the new URL in the history, the new URL is overwritten on the old history. With this constitution, since the new URL can be left in the history, the portable telephone can be easily accessed to the Internet from the next time.

The sixteenth aspect of the invention is a portable telephone capable of making an access to a home page of the Internet with a history employing the home page accessing method as described above. With this constitution, it is possible to provide the portable telephone capable of making an access to the Internet through an easy accessing operation.

### Brief Description of the Drawings

Fig. 1 is a front view illustrating the configuration of a portable telephone according to the present invention.
Fig. 2 is a circuit blockdiagramof a circuit for embodying the portable telephone of Fig. 1.
Fig. 3 is a view illustrating an example of an icon screen which is displayed in a waiting state on a display of the portable telephone of Fig. 1.
Fig. 4 is a transition view for explaining the operation of the portable telephone according to the first embodiment of the invention.
Fig. 5 is a transition view for explaining an operation of i-warp registering the URL to the portable telephone according to the first embodiment of the invention.
Fig. 6 is a flowchart for explaining the voice calling of the i-warp registered URL according to the first embodiment of the invention.
Fig. 7 is a transition view for explaining the operation of the portable telephone according to the second embodiment of the invention.
Fig. 8 is a transition view for explaining an operation of i-warp registering the URL to the portable telephone according to the second embodiment of the invention.
Fig. 9 is a flowchart for explaining an operation of calling the URL displayed on the terminal screen lastly at the previous time among the i-warp registered URLs according to the second embodiment of the invention.
Fig. 10 is a transition view for explaining the operation of the portable telephone according to the third embodiment of the invention.
Fig. 11 is a transition view for explaining an operation of i-warp registering the URL to the portable telephone according to the third embodiment of the invention.
Fig. 12 is a flowchart for explaining an operation of calling the URL which is i-warp registered according to the third embodiment of the invention.
Fig. 13 is a view illustrating the transition of the display screen of the portable telephone according to the fourth embodiment of the invention.
Fig. 14 is a view showing the content of a URL history saving area provided in a memory 26 according to the fourth embodiment of the invention.
Fig. 15 is a flowchart for explaining an operation of making a access to a home page of the Internet on the basis of the saved URL history and saving the history for the new URL according to the fourth embodiment of the invention.

### Detailed Description of the Preferred Embodiment

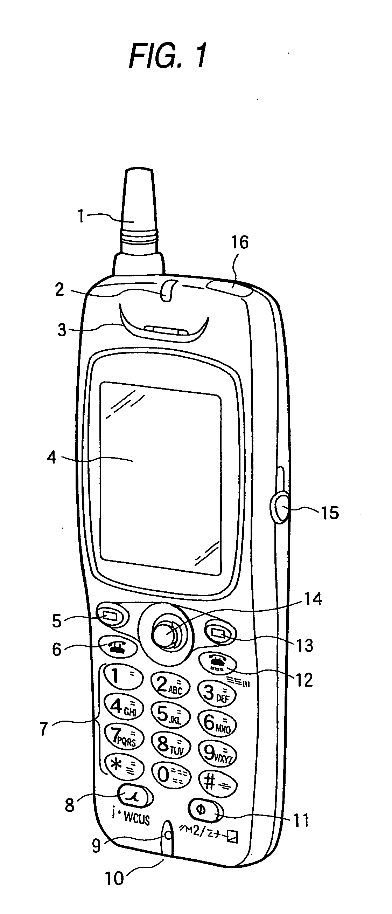

The preferred embodiments of the present invention will be described below with reference to Figs. 1 to 15.

Fig. 1 is a schematic view illustrating the structure of a portable telephone having a non-voice information communication mode (e. g., i-mode) function according to the present invention. In Fig. 1, the portable telephone according to the invention comprises an antenna 1, an incoming/charge lamp 2, a telephone receiver 3, a liquid crystal display 4, a left soft key 5 serving as a telephone directory button, a call start button 6, a ten-key or dial key 7, a warp key (jump key) 8 for accessing a registered URL, a transmitter 9, an external connection terminal 10, a voice/manner key 11, a power source/end/answer holding key 12, a right soft key 13 serving as a redial/clear button, a navigation key 14 having a scroll function to scroll the display in an upper, lower, right or left direction, and determining the scrolled display by pressing a central button, an earphone/microphone terminal 15, and an infrared port 16.

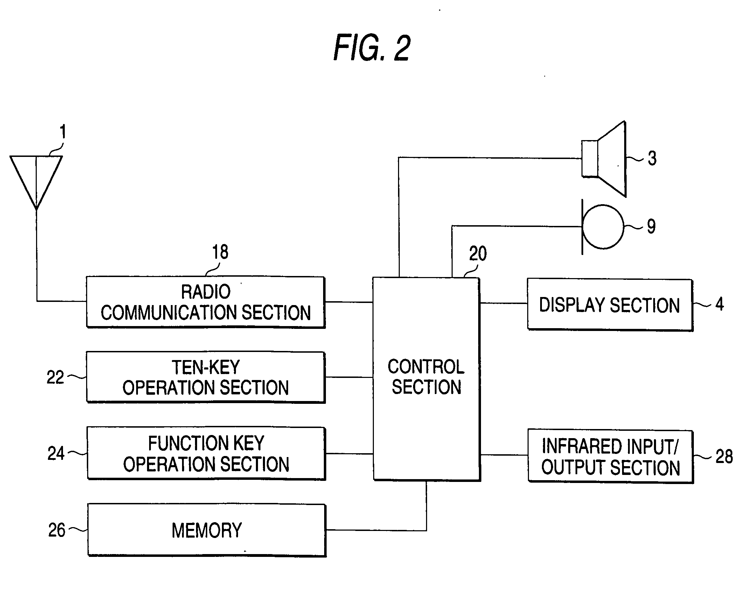

Fig. 2 is a circuit block diagram for realizing the portable telephone with the above constitution. In Fig. 2, the portable telephone receives a radio wave at the antenna 1 through a receiving part of a radio communication section 18 and then the received information is transmitted to a control section 20. The control section 20 displays the received information such as a telephone number on the liquid crystal display 4. Also, the control section 20 converts the received information into voice information, and outputs it in voice from the speaker (telephone receiver) 3 of the telephone receiving section. The transmitter (microphone) 9 accepts the voice of the user and passes it to the control section 20, wireless transmitting the voice through a transmitting part (not shown) of the radio communication section 18 and the antenna 1 to a called party.

The control section 20 controls the voice information such as speech content to be memorized during the call, or the memorized information to be read in the memory 26. A ten-key operation section 22 enters a dial signal into the control section 20 by an operation of the ten-key 7, and a function key operation section 24 for other than the ten-key enters an operation of a function key, for example, the navigation key 14 into the control section 20. Also, an infrared input/output section 28 inputs or outputs an infrared signal via the infrared port 16. The circuit block is accommodated with a housing of Fig. 1.

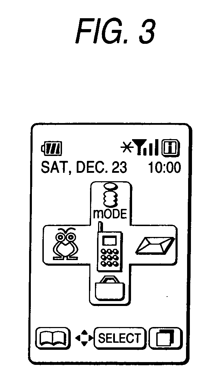

Fig. 3 illustrates an example of an icon screen which is displayed in an waiting state on the display of the portable telephone with the above constitution. In this example, the icon screen with a cross shape appears, wherein an i-mode main icon, an i-mode mail icon, a telephone icon, a screen icon, and a menu icon in the center are displayed clockwise from the upside, a selected icon screen being displayed in enlargement to clarify which icon screen is selected at present.

### (Embodiment 1)

The first embodiment of the present invention will be describedbelow. According to the first embodiment, the control section 20, shown in Fig. 2, is provided with voice recognition means, not shown, to recognize the voice information entered from the transmitter (microphone) 9, and collate it with an i-warp name (i.e., the registered sight) registered in a memory 26, wherein if they are coincident, the URL corresponding to the i-warp name is read, and the automatic access to the intended URL is effected.

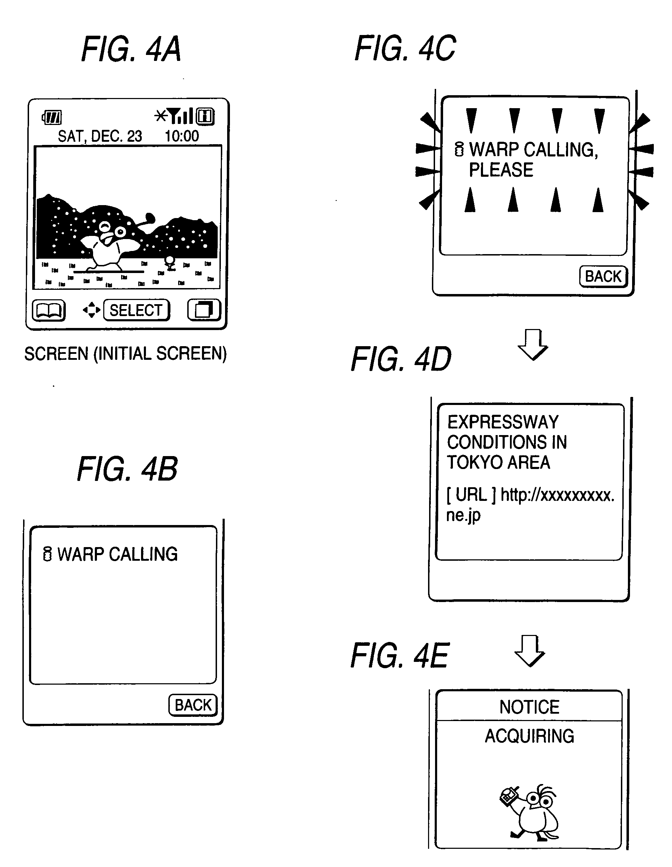

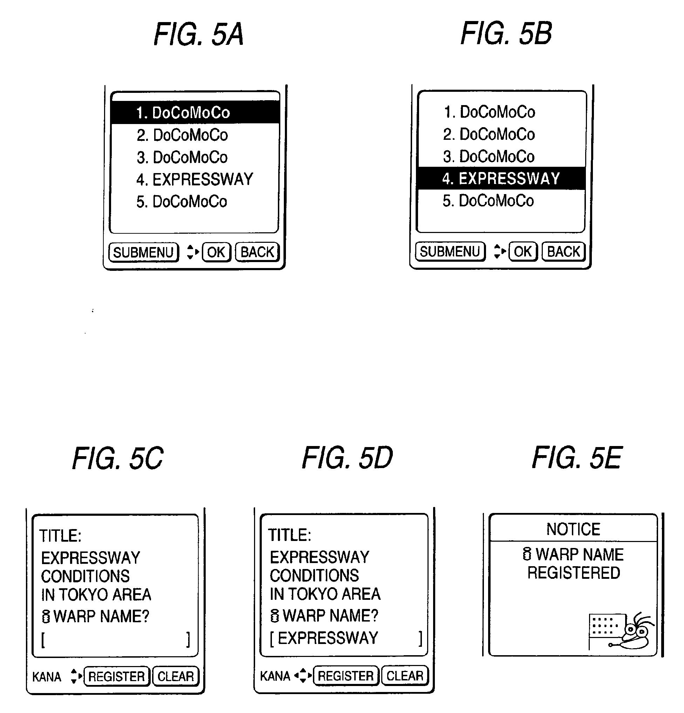

Figs. 4 and 5 illustrate the transition of the display screen in the portable telephone for explaining the first embodiment of the invention. In the portable telephone of this embodiment, the portable telephone is placed in a waiting state by operating the power key 12. Then, since a screen indicating the waiting state appears, as shown in Fig. 4A, the browser function key (warp key) 8 is operated, and a little later, the voice key 11 is operated to enable the portable telephone to make transition to an i-warp callable screen, as shown in Fig. 4B.

After the beep sound is heard, a screen indicating the i-warp voice calling ready appears, as shown in Fig. 4C. Then, the voice calling of URL is practiced. In this case, the "i-warp name" which is the URL name or the name which the user actually speaks in registering the i-warp name with the voice (as will be described later) is attached, whereby the i-warp registered URL can be called only by entering the "i-warp name" with the voice. Herein, supposing that the "i-warp name" is registered with the voice as a name "expressway", if the "expressway" is entered in voice, a screen with the "title" and "URL" is displayed as shown in Fig. 4D.

In the screen display of Fig. 4D, the "title" or "URL" is referenced to confirm whether or not the intended i-warp has been called with the voice. If the registered i-warp is confirmed, the access to an intended URL is effected about two seconds after the screen with the "title" and "URL" is displayed as shown in Fig. 4D. Consequently, a screen is displayed as shown in Fig. 4E.

Fig. 5 is a transition diagram for explaining a procedure for registering the URL to an i-warp name with the voice. In a waiting state, a "List of i-warp registered names" as shown in Fig. 5A appears by operating the determination key of the navigation key 14, ten-key "4", and then ten-key "4", to display the current contents of i-warp registered names.

Since the made-up names are registered at registration numbers 1 to 9 in an initial state, the registration number which the user wants to register, for example #4, is selected as shown in Fig. 5B. Then, the URL title is entered in characters such as "Expressway conditions in Tokyo area" corresponding to this registration number #4, and further the name spoken in voice calling or the "i-warp name" is entered in characters. Herein, since the "i-warp name" is "expressway" as shown in Fig. 5C, the characters "expressway" are entered. If this entry is correct, the determination key of the navigation key 14 is pressed to determine the i-warp name. Then, a screen as shown in Fig. 5E is displayed to notify that the registration of the i-warp name is completed. The registered i-warp name and title are saved in a table format in the memory 26.

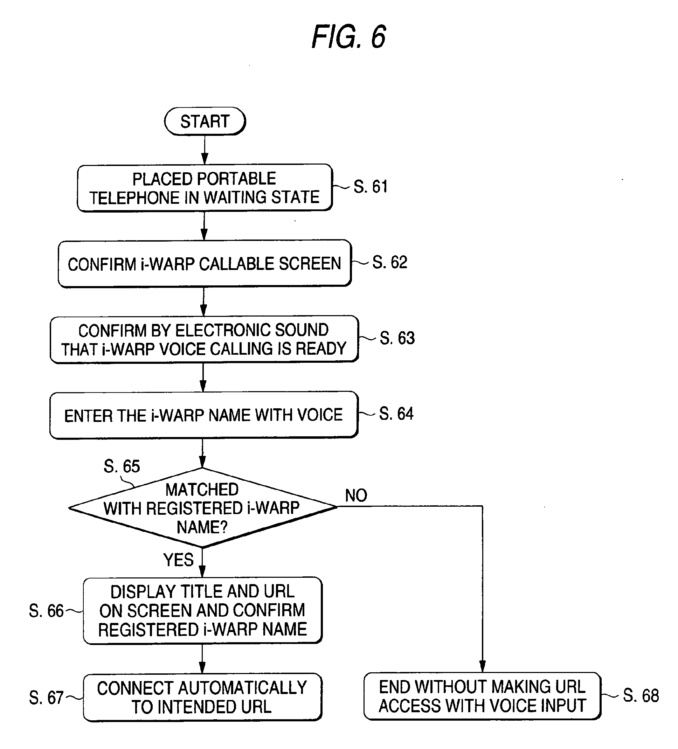

Fig. 6 is a flowchart for explaining the voice calling of i-warp registered URL. In Fig. 6, to make the voice calling of i-warp registered URL, the portable telephone is first placed in a waiting state by manipulating the power key 12 (step 61).

Then, an i-warp callable screen is confirmed by pressing the browser function key (warp key) 8 and then operating the voice key 11 (step 62). Further, the i-warp voice calling ready is confirmed by electronic sound (step 63).

The "i-warp name" is entered in voice (step 64). Then, it is determined whether or not the voice entered "i-warp" name is matched with the registered i-warp name (step 65). In this case, the voice entered "i-warp name" is recognized by voice recognition means (not shown) .and determined whether or not to be.matched with the i-warp name entered in characters and registered.

In the case where the voice entered "i-warp name" is matched with the registered i-warp name, the i-warp registered "title" and "URL" are displayed on the screen to allow confirmation of the registered i-warp (step 66). Then, the access to an intended URL is automatically made (step 67).

In the case where the voice entered "i-warp name" is unmatched with the registered i-warp, the URL access with voice input is not made and the procedure is ended (step 68).

### (Embodiment 2)

The second embodiment of the present invention will be described below. According to the second embodiment, the control section 20, shown in Fig. 2, controls the latest URL accessed to be stored in the memory 26, when the URL information is accessed through the browser. And after the access of URL information is ended, the URL is still stored so that the URL displayed on the terminal screen lastly at the previous time can be recalled.

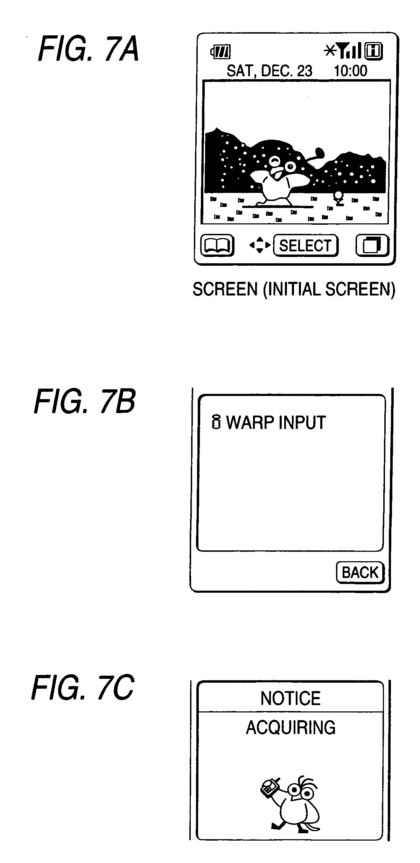

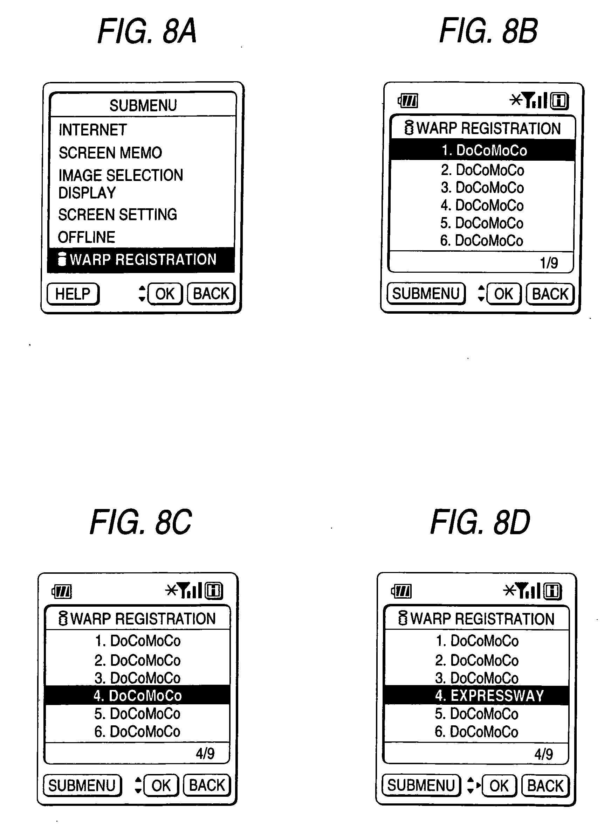

Figs. 7 and 8 illustrate the transition of the display screen in the portable telephone for explaining the second embodiment of the invention. In the portable telephone of this embodiment, the portable telephone is placed in a waiting state by operating the power key 12. Then, a screen indicating the waiting state appears, as shown in Fig. 7A.

A procedure for i-warp registering the URL to enable the URL access will be described below. Fig. 8 is a transition view for explaining the procedure for i-warp registering the URL. In an icon screen as shown in Fig. 3, an "i-mode main" icon is called. Further, an "i-mode main" screen is selected, and then an "i-Menu" (not shown) is selected, whereby a "submenu screen" as shown in Fig. 8A can be displayed by operating the left soft key 5. If the user selects an "i-warp registration" using a scroll key, the "i-warp registration" which is a selected item is displayed in reverse.

In this way, the current content of the "i-warp registration" is displayed in reverse as shown in Fig. 8B. Since the aerial names are registered at registration numbers #1 to #9 in an initial state, the registration number which the user wants to register, for example #4, is selected as shown in Fig. 8C by entering the registration number by means of the ten-key, or scrolling with the navigation key 14. Then, the URL title is entered in characters such as "Expressway conditions in Tokyo area" corresponding to this registration number #4, and further the URL is successively entered in characters. In this way, the title and URL are registered at the registration number #4 as shown in Fig. 8D.

Since the title of Fig. 8D is too long, a part of the title has been cut. To see the long title fully, a right scroll key of the navigation key 14 may be operated to read the entire tile. And the determination key of the navigation key 14 is pressed to determine the i-warp registration at the registration number #4.

By operating the browser function key (warp key) 8 while the portable telephone is waiting state, an i-warp input screen appears as shown in Fig. 7B. Herein, if the user enters a ten-key "0" as the specific key, the URL (Uniform Resource Locator) displayed on the terminal screen lastly at the previous time is displayed and the access to the URL is made.

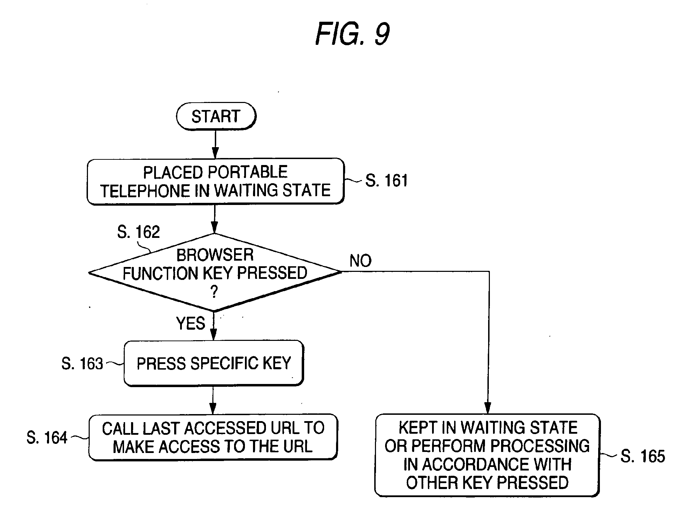

Fig. 9 is a flowchart for explaining an operation of calling the URL displayed in the terminal screen lastly at the previous time among the i-warp registered URLs.

Before starting the operation of Fig. 9, the portable telephone is first placed in the waiting state by operating the power key 12 (step 161) . Thereafter, it is detected whether or not the browser function key (warp key) 8 is pressed (step 162) . If the browser function key (warp key) 8 has been pressed, the ten-key "0" as the specific key is pressed (step 163).

If this specific key is pressed, the URL displayed on the terminal screen lastly at the previous time is called and the access to this URL is made (step 164). If it is not detected that the browser function key (warp key) 8 is pressed at step 162, the portable telephone is kept in the waiting state, or performs the processing in accordance with an instruction of other key pressed.

In the above explanation, the ten-key "0" is employed as the specific key to call the URL displayed on the terminal screen lastly at the previous time. However, any other key may be employed as the specific key.

### (Embodiment 3)

The third embodiment of the present invention will be described below. According to the third embodiment, the URL is stored in the memory 26 in correspondence to the registration number. And the control section 20 controls the URL corresponding to the input registration number to be called by pressing the warp key 8 which is the browser function key in the function key operation section 24 and then entering the registration number, while the portable telephone is waiting. Also, an infrared input/output section 28 inputs or outputs an infrared signal via the infrared port 16.

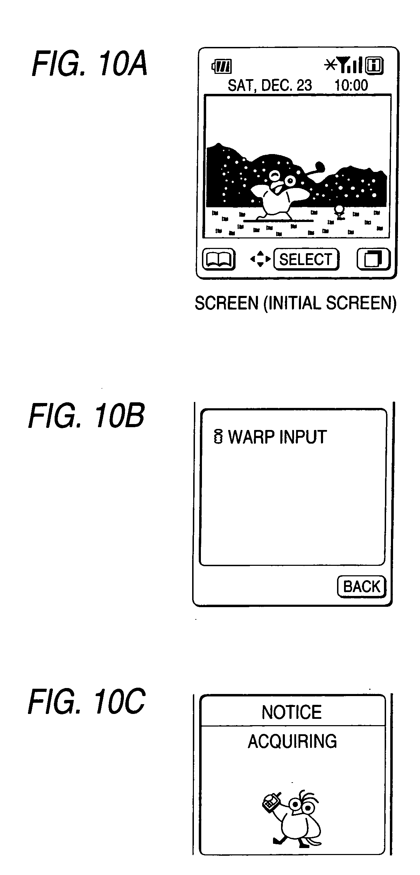

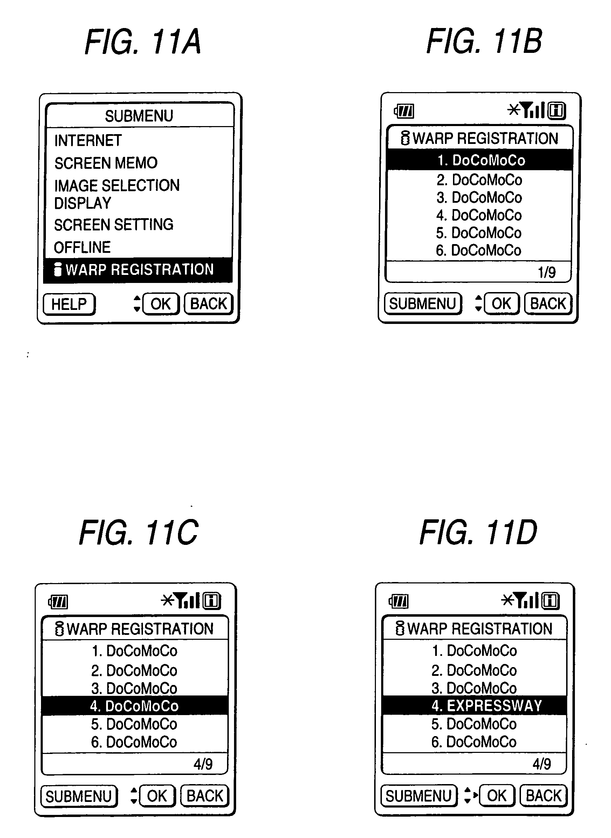

Figs. 10 and 11 illustrate the transition of the display screen in the portable telephone for explaining the third embodiment of the invention. In the portable telephone of this embodiment, the portable telephone is placed in a waiting state by operating the power key 12. Then, a screen indicating the waiting state appears, as shown in Fig. 10A.

An i-warp input screen as shown in Fig. 10B appears by operating the browser function key (warp key) 8. By entering any number of "1" to "9", the URL registered in correspondence to the registration number of "1" to "9" for the ten-key can be called. To enable the URL access in a simple operation as above, the URL must be i-warp registered, but this will be described below.

Fig. 11 is a transition view for explaining the procedure for i-warp registering the URL. In an icon screen as shown in Fig. 3, an "i-mode main" icon is called. Further, an "i-mode main" screen is selected, and then an "iMenu" (not shown) is selected, whereby a "sub-menu screen" as shown in Fig. 11A can be displayed by operating the left soft key 5. If the user selects an "i-warp registration" using a scroll key, the "i-warp registration" which is a selected item is displayed in reverse.

In this way, the current content of the "i-warp registration" is displayed in reverse as shown in Fig. 11B. Since the made-up names are registered at registration numbers #1 to #9 in an initial state, the registration number which the user wants to register, for example #4, is selected as shown in Fig. 11C by entering the registration number by means of the ten-key, or scrolling with the navigation key 14. Then, the URL title is entered in characters such as "Expressway conditions in Tokyo area" corresponding to this registration number #4, and further the URL is successively entered in characters. In this way, the title and URL are registered at the registration number #4 as shown in Fig. 11D.

Since the title of Fig. 11D is too long, a part of the title has been cut. To see the long title fully, a right scroll key of the navigation key 14 may be operated to read the entire tile. And the determination key of the navigation key 14 is pressed to determine the i-warp registered URL at the registration number #4.

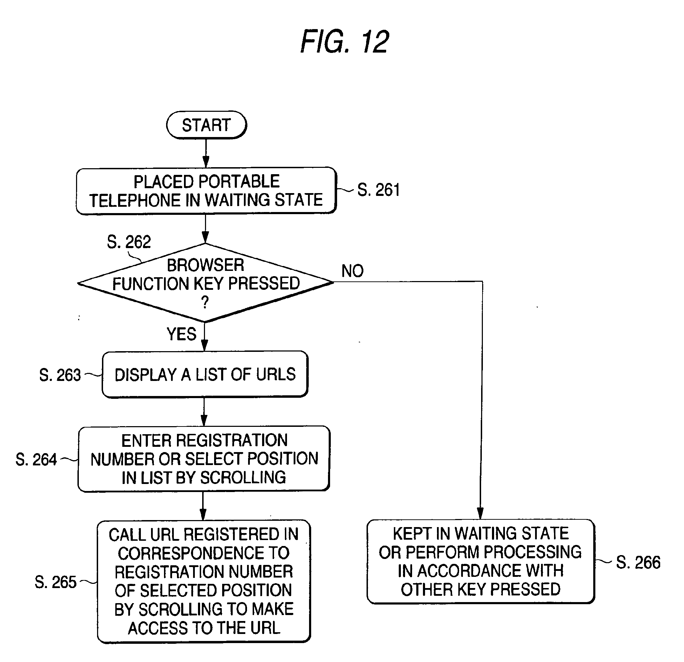

Fig. 12 is a flowchart for explaining an operation of calling the i-warp registered URL. In Fig. 12, the portable telephone is first placed in the waiting state by operating the power key 12 (step 261). Thereafter, it is detected whether or not the browser function key (warp key) 8 is pressed (step 262). If the browser function key (warp key) 8 has been pressed, a list of URLs is displayed (step 263). Then, the registration number is entered, or the URL position in the list is selected by scrolling (step 264).

And the URL registered in correspondence to the registration number or the selected position by scrolling is called to make access to the URL (step 265). If it is not detected that the browser function key (warp key) 8 is pressed at step 262, the portable telephone is kept in the waiting state, or performs the processing in accordance with an instruction of other key pressed (step 266).

In the above explanation, the URL is registered in correspondence to the registration number from 1 to 9. However, the URL may be registered in other registration number with more digits such as 99 or 999.

### (Embodiment 4)

The fourth embodiment of the invention will be described below. According to the fourth embodiment, the memory 26 stores the history of URLs at which the portable telephone has made a calling access to the Internet. The control section 20 reads a plurality of URLs which have been called by the previous time and displays them on the display 4, when an operation mode of the Internet is initiated. If a URL in the history is selected by the ten-key operation section 22 or the function key operation section 24, the portable telephone is access to a home page of the Internet at the selected URL.

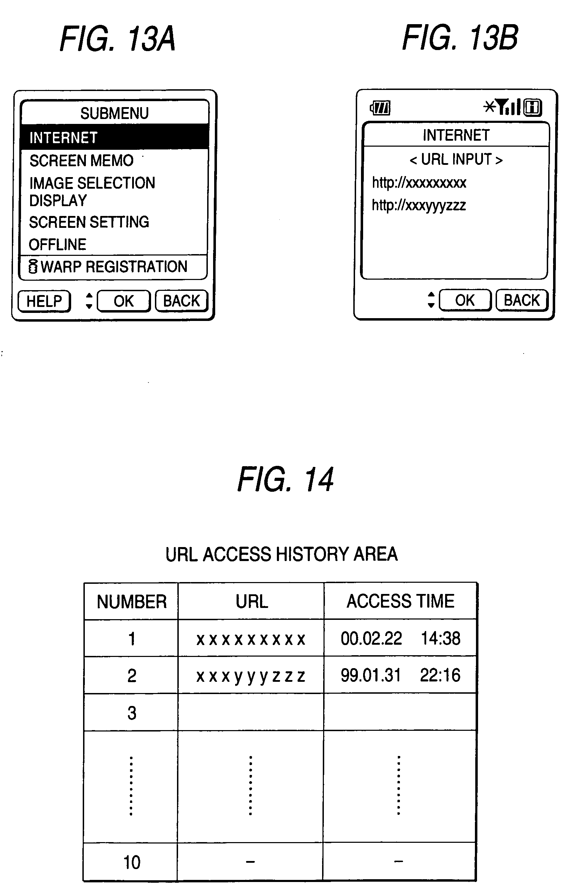

Fig. 13 illustrates the transition of the display screen for the portable telephone for explaining an embodiment of the invention. In an icon screen as shown in Fig. 3, an "i-mode main" icon is called. Further, an "i-mode main" screen is selected, and then an "iMenu" (not shown) is selected, whereby a "sub-menu screen" as shown in Fig. 13A can be displayed by operating the left soft key 5. Herein, the user selects the "Internet" which is displayed in reverse.

Then, the content of the memory 26 storing the history is displayed as shown in Fig. 13B. In an example of Fig. 13B, there are already two items in the history. If the intended URL does not exist in the history consisting of these two items, a new URL must be entered. In the case where <URL input> is selected, the new URL can be entered. In this invention, a maximum of ten items can be left in the history.

On the other hand, for two items in the history, if the intended URL exists, the portable telephone can be accessed to the Internet of interest only by selecting it with the navigation key 14.

In Fig. 13B, an entry column for the new URL is set at the uppermost location in the history of URLs, but may be naturally set at the lowermost location.

Fig. 14 is a table showing the stored content of the URL history saving area which is provided in the memory 26. In Fig. 14, the URL history saving area can save the URL and the call date and time at the locations numbered 1 to 10. If the history saving area is too insufficient to enter the new URL, the new URL is overwritten on the old history. Hence, the portable telephone can be accessed to the home page of the Internet more easily than before, on the basis of the history of URLs.

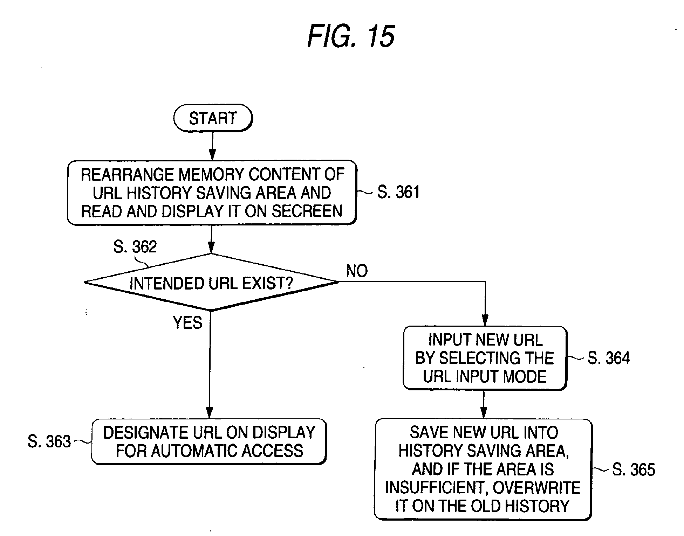

Fig. 15 is a flowchart for explaining an operation of making an access to the home page of the Internet on the basis of the history of URLs which is saved, and an operation of saving the history for the new URL. In Fig. 6, the memory content of the URL history saving area is rearranged in the order of latest access by executing a URL history control program, and readout and displayed on the screen (step 361). Then, it is determined whether or not the intended URL exists in the history displayed on the screen (step 362).

If the intended URL exists, the portable telephone is automatically accessed to the home page of the Internet by designating the URL being displayed (step 363). If the intended URL does not exist, a new URL is entered by selecting a <URL input> column being displayed on the screen (step 364). And the new URL is entered into the history saving area as shown in Fig. 14, and if the area is insufficient, the new URL is overwritten on the old history (step 365).

In this way, since two or more items can be left in the history within an allowable capacity of the history saving memory area, the portable telephone can be accessed to the home page of the Internet on the basis of the URL history more easily than before.

As described above, the first aspect of the invention provides a voice calling method of URL in a portable telephone capable of gaining access to the URL information through a browser, wherein the portable telephone is placed in a ready state for calling the URL with the voice by pressing a browser function key and then operating a voice input key, while the portable telephone is waiting, and upon calling a URL with the voice, a coincidence judgement is performed whether or not the called URL is matched with the registered URL, wherein if they are matched, the voice calling of URL is made. With this constitution, the voice calling of URL can be effected in a simple operation.

The second aspect of the invention provides the voice calling method of URL in the portable telephone, wherein the browser function key is a warp key for warping the portable telephone to a non-voice information communication mode. With this constitution, the voice calling of URL can be effected in a simple operation.

The third aspect of the invention provides a portable telephone capable of calling the URL with the voice input employing the voice calling method of URL as described above. With this constitution, the portable telephone capable of calling the URL with the voice can be provided.

The fourth aspect of the invention provides a calling method of URL in a portable telephone capable of gaining access to the URL information through a browser, wherein the portable telephone is able to call the URL which has been displayed on a terminal screen lastly at the previous time by pressing a browser function key and then one specific key, while the portable telephone is waiting. With this constitution, the URL displayed on the terminal screen lastly at the previous time can be called in a simple operation.

The fifth aspect of the invention provides the calling method of URL in the portable telephone, wherein the browser function key is a warp key for warping the portable telephone to a non-voice information communication mode. With this constitution, the URL displayed on the terminal screen lastly at the previous time can be called in a simple operation.

The sixth aspect of the invention provides the calling method of URL in the portable telephone, wherein the specific key is a ten-key "0". With this constitution, the URL displayed on the terminal screen lastly at the previous time can be called in a simple operation.

The seventh aspect of the invention provides a portable telephone capable of calling the URL which has been displayed on a terminal screen lastly at the previous time employing the calling method of URL. With this constitution, it is possible to provide the portable telephone capable of calling the URL displayed on the terminal screen lastly at the previous time in a simple operation.

The eight aspect of the invention provides a calling method of URL in a portable telephone capable of gaining access to the URL information through a browser, wherein the portable telephone is able to call the URL which is registered in correspondence to a registration number by pressing a browser function key and then entering the registration number, while the portable telephone is waiting. With this constitution, the URL registered in correspondence to the registration number can be called in a simple operation.

The ninth aspect of the invention provides the calling method of URL in the portable telephone, wherein the browser function key is a warp key for warping the portable telephone to a non-voice information communication mode. With this constitution, the URL registered in correspondence to the registration number can be called in a simple operation.

The tenth aspect of the invention provides a callingmethod of URL in a portable telephone capable of gaining access to the URL information through a browser, wherein the portable telephone is able to call the registered URL by pressing a browser function key to display a list of URLs and then selecting a URL through the scrolling operation to determine the position of the URL, while the portable telephone is waiting. With this constitution, the URL registered in correspondence to the registration number can be called even through the scrolling operation.

The eleventh aspect of the invention provides a portable telephone capable of calling the URL which has been registered in correspondence to the registration number, employing the calling method of URL. With this constitution, it is possible to provide the portable telephone capable of calling the URL registered in correspondence to the registration number in a simple operation.

The twelfth aspect of the invention provides a home page accessing method in a portable telephone capable of communicating the non-voice information, wherein when an operation mode of the Internet is initiated to make a access to the Internet, a history of plural URLs for the Internet which have been calledby the previous time is displayed on the screen, and by selecting a URL from the history, said portable telephone can make a access to a home page of the Internet at the URL in the history. With this constitution, the portable telephone can be simply accessed to the Internet by selecting the URL from the history.

The thirteenth aspect of the invention provides the home page accessing method in the portable telephone, wherein the history of two or more URLs to make a calling access to the Internet can be displayed within an allowable capacity of a history saving memory, without overlapped history for the same URL. With this constitution, two or more items can be left in the history within an allowable capacity of the history saving memory area.

The fourteenth aspect of the invention provides the home page accessing method in the portable telephone, wherein when a new URL without history is called, the new URL is entered in a URL entry column to make an access to the new URL, and the new URL is left in the history. With this constitution, since the new URL can be left in the history, the portable telephone can be easily accessed to the Internet from the next time.

The fifteenth aspect of the invention provides the home page accessing method in the portable telephone, wherein if the URL history saving memory area is too insufficient to save the new URL in the history, the new URL is overwritten on the old history. With this constitution, since the new URL can be left in the history, the portable telephone can be easily accessed to the Internet from the next time.
The sixteenth aspect of the invention provides a portable telephone capable of making an access to a home page of the Internet with a history employing the home page accessing method as described above. With this constitution, it is possible to provide the portable telephone capable of making an access to the Internet through an easy accessing operation.

## Claims

1. A calling method of URL for a portable telephone capable of accessing to the URL through a browser, comprising steps of:
pressing a browser function key for display a list of URLs during the portable telephone in waiting state;
selecting a URL through a scrolling operation to determine the position of the URL.

2. A homepage accessing method for accessing internet for a portable telephone capable of accessing to the URL through a browser, comprising steps of:
display a history of at least one of URLs which have been accessed;
selecting a URL in the history to make an access a homepage at the selected URL in the history.

3. The homepage accessing method for the portable telephone according to claim 9, wherein the history of two or more URLs can be displayed within an allowable capacity of a history saving memory, without overlapped history for the same URL.

4. A homepage accessing method for the portable telephone according to claim 9, further comprising steps of:
entering a new URL which is not in the history, in a URL entry column to make an access to the new URL; and
leaving the new URL in the history.

5. A home page accessing method for the portable telephone according to claim 11, wherein when the URL history saving memory area is too insufficient to save a history of the new URL entered, the history of the new URL is overwritten on the old history.

6. A portable telephone capable of calling URL employing the calling method of URL according to any one of claims 1 to 12.
